# EUROPEAN PATENT SPECIFICATION

(11) **EP 2 952 698 B1**
(45) Date of publication and mention of the grant of the patent: **09.12.2020**
(21) Application number: 15170890.6
(22) Date of filing: 05.06.2015
(51) Int. Cl.: F01D 25/12, F02C 3/13, F02C 7/18, F02C 9/18

(54) **TURBINE STAGE COOLING**
TURBINENSTUFENKÜHLUNG
REFROIDISSEMENT D'UN ÉTAGE DE TURBINE

(30) Priority: 06.06.2014 US 201462008709 P
(43) Date of publication of application: 09.12.2015
(73) Proprietor: United Technologies Corporation, Farmington, CT 06032 (US)
(72) Inventor: SUCIU, Gabriel L., Glastonbury, CT Connecticut 06033 (US); MERRY, Brian D., Andover, CT Connecticut 06232 (US); HILL, James D., Tolland, CT Connecticut 06084 (US); ZELESKY, Mark F., Bolton, CT Connecticut 06043 (US)
(74) Representative: Dehns

(56) References cited:
- EP-A1- 2 309 108
- EP-A2- 1 923 539
- CA-A1- 2 626 926
- GB-A- 2 474 567
- JP-A- 2010 038 071
- US-A- 4 254 618

## Description

### TECHNICAL FIELD

The present disclosure relates generally to a cooling system for cooling turbine stages in a gas turbine engine, and more specifically to a system for utilizing compressor bleed air to cool at least one turbine stage.

### BACKGROUND

Gas turbine engines, such as those utilized in commercial aircraft, include a compressor section that compresses air and a combustor section that ignites combustion gasses mixed with the compressed air. The gasses generated by the combustion section are super-heated and expelled through a turbine section, driving the turbine section to rotate. Absent some form of cooling, the high temperatures of the expelled gasses can cause thermal degradation to occur in the turbine section.

To mitigate thermal degradation from the extreme temperatures, some or all of the turbine stages are actively cooled by passing relatively cool air through the turbine stage. The active cooling increases the life span of the components in the actively cooled turbine stage by reducing breakage resulting from thermal wear. In some example gas turbine engines the relatively cool air is drawn from a bleed located in the compressor section (referred to as a compressor bleed) and is piped directly to the actively cooled turbine stage.

In practical applications, the pressure of the relatively cool air must meet or exceed a required pressure threshold in order to properly pass through the corresponding turbine stage and provide the cooling effect. Thus, the particular compressor stage selected for the compressor bleed must be at a minimum level of pressure.

As air passes through the compressor section and the pressure increases, the temperature of the air also increases. In some gas turbine engines this can result in the air bled from the first compressor stage having a high enough pressure being warmer than desired and not fully cooling the corresponding turbine stage. The lack of full cooling decreases the life span of the cooled turbine stage components.

A prior art method for cooling a turbine stage of a gas turbine engine, having the features of the preamble to claim 1 is disclosed in EP 2,309,108. Other prior art gas turbine engines and methods for cooling the same are disclosed in US 4,254,618 and EP 1,923,539.

### SUMMARY OF THE INVENTION

The present invention provides a method for cooling a turbine stage of a gas turbine engine in accordance with claim 1.

Features of embodiments are recited in the dependent claims.

A further embodiment of the above method includes providing a portion of the overcooled gas to a gas turbine engine component, thereby cooling the gas turbine engine component, and wherein a temperature of the overcooled gas is at least cold enough to provide a full cooling effect to the gas turbine engine component.

These and other features of the present invention can be best understood from the following specification and drawings, the following of which is a brief description.

### BRIEF DESCRIPTION OF THE DRAWINGS

Figure 1 schematically illustrates a gas turbine engine.
Figure 2 schematically illustrates a portion of the gas turbine engine of Figure 1 in greater detail.
Figure 3 illustrates a flowchart outlining a process for partially overcooling bleed air used to cool a turbine stage.

### DETAILED DESCRIPTION OF AN EMBODIMENT

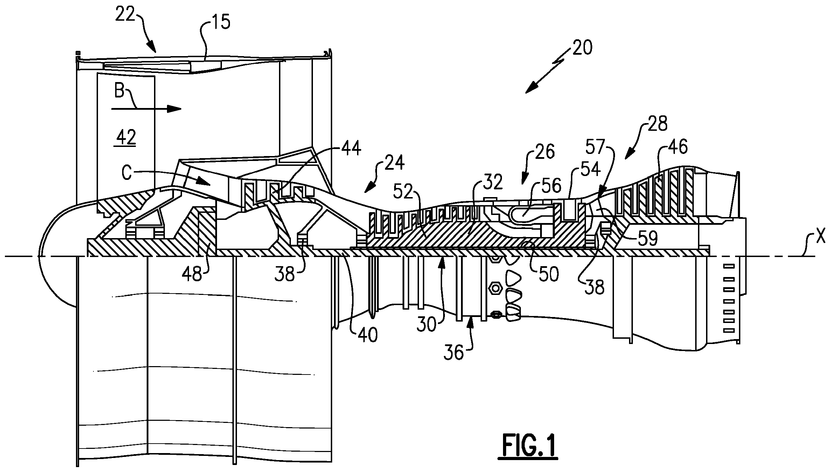

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine section 54. A mid-turbine frame 57 of the engine static structure 36 is arranged generally between the high pressure turbine section 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine section 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach (272 m/s) and about 35,000 feet (10.7 km). The flight condition of 0.8 Mach (272 m/s) and 35,000 ft (10.7 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5 (where °R = °K x 9/5). The "Low corrected fan tip speed" as disclosed herein according to one non-limiting embodiment is less than about 1150 ft / second (350.5 m/s).

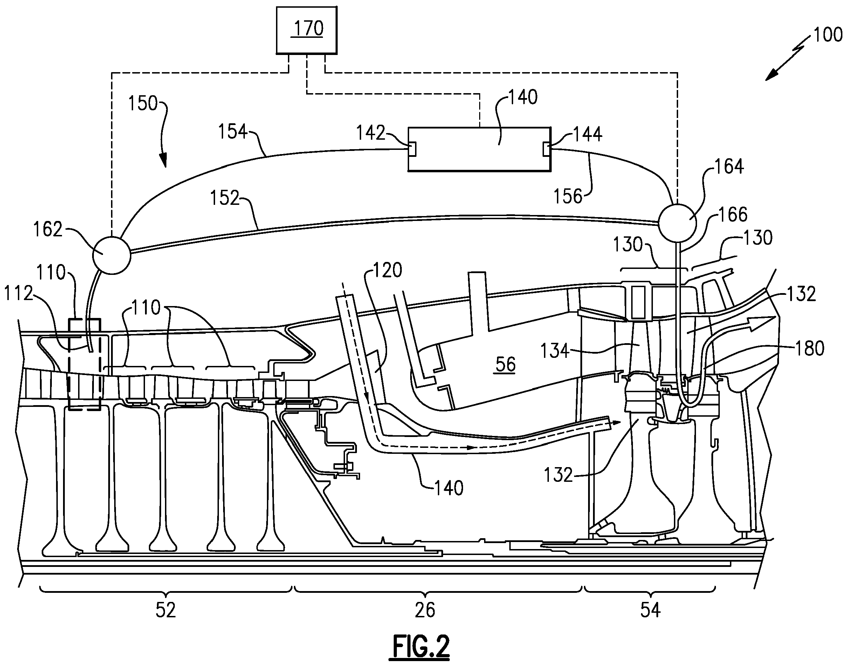

With continued reference to Figure 1, Figure 2 illustrates a zoomed in partial view 100 of the gas turbine engine 20 illustrated in Figure 1 including the high pressure compressor section 52, the combustor section 26 and the high pressure turbine section 54. During operation of the gas turbine engine 20, a gas, in the form of air, is compressed in the high pressure compressor section 52, with each sequential stage 110 of the high pressure compressor section 52 having a higher pressure than the previous stage 110. The compression of the gas passing through the high pressure compressor section 52 causes the gas to increase in temperature. The compressed gas is expelled from the compressor section 52 at an opening 120 into the combustor section 26. Combustion in the combustor section 26 occurs within the combustor 56, and the resultant gasses from the combustion are forced from the combustor 56 into the high pressure turbine section 54. The gasses passing through the high pressure turbine section 54 drive rotation of the high pressure turbine section 54.

The heat from the combustion in the combustor 26, as well as the high temperatures of the gasses exiting the high pressure compressor section 52, cause the gasses entering the high pressure turbine section 54 to be at extreme temperatures. Without providing cooling to each of the stages 130 within the turbine sections 46, 54, the gasses passing through the turbine sections 46, 54 will exceed the workable temperature range of the turbine stages 130 causing rapid thermal degradation of the components in the turbine stage 130.

In order to compensate for the excessive temperatures, cooling air is impinged upon, and passed through the turbine stages 130, thereby cooling the turbine stages 130. In some example systems, the first stage 130 of the high pressure turbine section 54 is cooled via a turbine injection system (alternately referred to as a Tangential On Board Injector, or TOBI). The turbine injection system directs cooling air from a source located in the gas turbine engine onto the first stage 130 of the high pressure turbine section 54.

The illustrated turbine injector system of Figure 2 does not cool the second stage 130 of the high pressure turbine section 54. In order to cool the second stage 130 of the high pressure turbine section 54, a cooling flow is passed through an interior passageway in a stator 132, and is expelled in such a manner that the cooling flow cools the second stage 130 of the high pressure turbine section 54.

In order to ensure that the gas provided in the cooling flow meets or exceeds the required pressure to prevent backflow from the active cooling system of the second stage 130, the cooling gas is bled from a stage 110 in the high pressure compressor section 52. As described previously, gas bled from the high pressure compressor section 52 exceeds the desired cooling temperature for cooling the corresponding stage 130 of the high pressure turbine section 54. The air at the bleed has a temperature above a first threshold of a cooling temperature range. Air with a temperature above the first threshold is too hot to provide full cooling. Conversely, air with a temperature below a second threshold of the cooling temperature range is cooler than necessary to provide full cooling. If the bleed gasses are provided directly to the second stage 130 of the high pressure turbine 54, the cooling gas provides insufficient cooling, resulting in quicker thermal degradation of the components in the second stage 130 of the high pressure turbine section 54.

In order to improve the cooling capabilities, the illustrated gas turbine engine 20 includes a heat exchanger 140 to cool the cooling gas prior to providing the cooling gas to the second stage 130 of the high pressure turbine 54. In some examples, the heat exchanger 140 is a buffer heat exchanger that also provides cooling gas to one or more other gas turbine engine 20 components, such as bearing compartments. In such an example, the heat exchanger 140 cools all the gas passing through the heat exchanger 140 to a sufficient level to cool the other components. This amount of cooling can result in an overcooling effect, where the cooling flow provided to the second stage 130 of the high pressure turbine section 54 is colder than necessary for the desired cooling effect. Overcooling the cooling gas reduces the performance of the engine, as any energy expended in cooling the gas beyond what is necessary, is energy that could be expended generating thrust. In alternate systems, a dedicated heat exchanger 140 can be utilized to cool the cooling gas from the compressor bleed 112, in such an example, overcooling of the cooling air can still occur within the system.

The cooling system illustrated in Figure 2 addresses the overcooling of the cooling gas by including a cooling gas pathway 150 including a first branch 152, a second branch 154 and a third branch 156.

Cooling gas is drawn from the compressor stage 110 through the compressor bleed 112, and is provided to a valve 162 that controls gas flow into the first branch 152 and the second branch 154. The cooling gas entering the first branch 152 is provided directly to a second valve 164 without undergoing any active cooling. Cooling gas entering the second branch 154 is provided to the heat exchanger 140 at a heat exchanger input 142. Once received at the heat exchanger 140, the cooling gas from the second branch 154 is overcooled in an active cooling process, and output to the third branch 156 at a heat exchanger output 144. In example systems where the heat exchanger 140 also provides cooling gas to another component within the gas turbine engine 20, the amount of gas output to the third branch 156 is less than the amount of cooling gas received from the second branch 154. The remaining portion of the cooled cooling gas is directed to the other component by the heat exchanger 140.

The third branch 156 of the cooling gas pathway 150 connects the output 144 of the heat exchanger 140 to the valve 164. At the valve 164, the cooling gas provided directly from the compressor bleed 112 through the first branch 152 is mixed with overcooled cooling gas from the heat exchanger 140 provided through the third branch 156. The mixing can be done immediately at the valve 164, in a mixing plenum downstream of the valve 164, or within cooling gas pipes defining the flowpath downstream of the valve 164, depending on the requirements of a given system.

By mixing the overcooled gas from the third branch 156 with the directly fed compressor bleed 112 gas from the first branch 152, cooling airflow of a desired temperature is achieved prior to providing the cooling airflow to a turbine stage cooling flow 180. This, in turn, prevents the excess energy from being spent on cooling the cooling airflow, and maximizes performance of the gas turbine engine 20. The turbine stage cooling flow 180 can cool the corresponding turbine stage using any known turbine stage cooling technique.

In some examples, the valves 162, 164 and the heat exchanger 140 are directly controlled via an onboard controller 170, such as an aircraft engine controller. In other examples, the valves 162, 164 and the heat exchanger 140 can be set at fixed mixing and cooling ratios, and the controller 170 can be omitted. In yet a further example, the controller 170 can control one or two of the valves 162, 164 and the heat exchanger 140, while the remainder of the valves 162, 164 and the heat exchanger 140 are set at fixed levels during assembly or design of the gas turbine engine 20.

In the illustrated example of Figure 2, the heat exchanger 140 and the controller 170 are supported and housed in an engine casing surrounding the core of the gas turbine engine. Furthermore, while illustrated as a single location bleed, one of skill in the art will understand that the compressor bleed 112 can be any compressor bleed arrangement capable of bleeding gasses from a desired compressor stage 110.

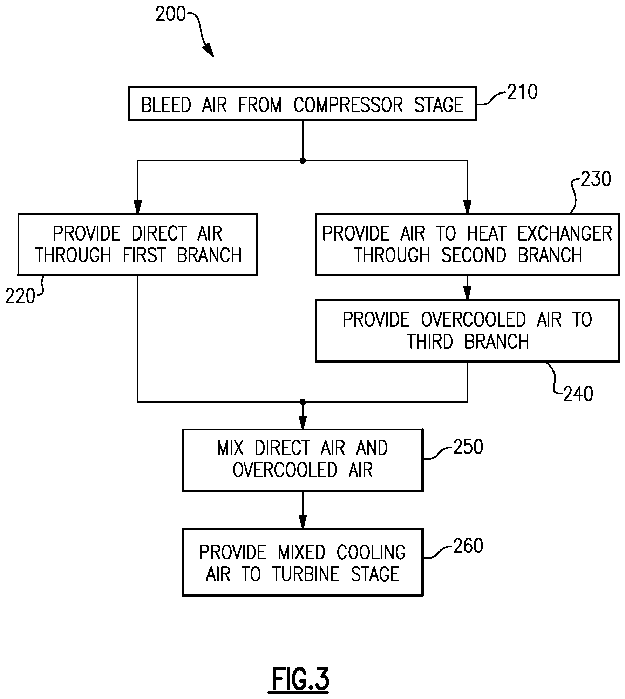

With continued reference to Figures 1 and 2, Figure 3 illustrates a process 200 by which mixed cooling gasses of a desired cooling temperature are provided to at least one stage 130 of the high pressure turbine section 54. Initially, cooling gas is bled from a compressor stage 110 at a compressor bleed 112 in a "bleed gas from compressor stage" step 210. The particular compressor stage 110 in which the bleed 112 is located is any high pressure compressor stage 110 where the bleed gas includes sufficient pressure to meet the required blade margins of the corresponding cooled turbine stage 130. In some examples, the compressor stage 110 selected is the lowest high pressure compressor stage 110 that is at sufficient pressure.

Once the cooling gas has been removed from the compressor stage 110 via the compressor bleed 112, the cooling gas enters a cooling fluid pathway and is branched at the valve 162. The first branch 152 of the cooling fluid pathway 150 provides cooling gas directly from the compressor bleed 112 to the second valve 164 in a "provide direct gas through first branch" step 220.

Simultaneous with providing cooling gas directly along the first branch 152, cooling gas is provided to the heat exchanger 140 from the valve 162 through the second branch 154 in a "provide gas to heat exchanger through second branch" step 230. Once in the heat exchanger 140, the gas is cooled using any known heat exchanger technique. The cooling gas is overcooled by the heat exchanger 140 to a temperature below a desired cooling temperature for the corresponding turbine stage 130.

Once cooled, the overcooled gas is provided to the second valve 164 through the third branch 156 in a "provide overcooled gas to third branch" step 240. Once at the second valve 164, the overcooled gas from the third branch 156 and the bleed gas (alternately referred to as direct gas) from the first branch 152 are mixed together in a "mix direct gas and overcooled gas" step 250. The cooling gas can be mixed in the valve 164 itself or in a mixing plenum downstream of the valve 164. In an alternative example, the cooling gas can be allowed to mix as the cooling gas flows through a cooling gas flowpath 166 connecting the valve 164 to the second stage 130 of the high pressure turbine section 54.

Once the direct gas and the overcooled gas have adequately mixed, such that the mixed gas has a uniform temperature of a desired coolness relative to the second stage 130 of the high pressure turbine section 54, the mixed gas is provided to the second stage 130 of the high pressure turbine section 54 in a "provide mixed cooling gas to turbine stage" step 260.

Once the mixed cooling gas has been provided to the second stage 130 of the high pressure turbine section 54, the mixed cooling gas is passed through a cooling flowpath in the stator and directed such that the cooling gas is delivered from the static stator to the rotating seal to cool the rotor, blade and seals. The air can be delivered using the above described TOBI, or any other known cooling air delivery system including, but now limited to, Radial On Board Injection (ROBI), angled holes, 3D shaped features, or any other aerodynamically designed air transfer feature that minimizes pressure loss and minimizes temperature increase of the delivered air. Structures and operation of the cooling flowpath within the stator and the cooling of the corresponding rotor blade and rotor disk are known in the art, and any known structure can be utilized in conjunction with the above described process.

While described in detail above as providing a cooling gas flow to a single stage of a high pressure compressor, it is understood that the mixed cooling gas generated by mixing the overcooled gas from the third branch 156 and the direct gas from the first branch 152 can be provided to additional high pressure turbine stages 130, alternate high pressure turbine stages, and to stages of a low pressure turbine section as well.

The following claims should be studied to determine the true scope and content of this invention.

## Claims

1. A method for cooling a turbine stage (130) of a gas turbine engine (20) comprising:
overcooling a portion of a bleed air flow thereby creating an overcooled air, wherein said portion is less than 100% of said bleed air;
mixing at least a portion of said overcooled air with a remainder of said bleed air flow, thereby creating a mixed air flow having a temperature within a cooling temperature range;
providing said mixed air flow to an active cooling system for the turbine stage (130);
providing a compressor bleed structure (112) disposed in a first compressor stage (110) and operable to remove air from said first compressor stage (110);
providing a fluid pathway (152,154,156) connecting the compressor bleed structure (112) to the active cooling system of a turbine stage (130), wherein the fluid pathway (152,154,156) includes a first fluid pathway (152) directly connecting the output of the compressor bleed structure (112) to a mixing plenum, a second fluid pathway (154) connecting the output of the compressor bleed structure (112) to an input (142) of a heat exchanger (140), and a third fluid pathway (156) connecting an output (144) of the heat exchanger (140) to the mixing plenum, and the mixing plenum is connected to a cooling air input of the active cooling system for the turbine stage (130); and
bleeding air from the first compressor stage (110) using the compressor bleed structure (112), wherein the first compressor stage (110) has a fluid pressure at least equal to a pressure threshold, wherein the pressure threshold is an amount of pressure at said mixing plenum required to prevent backflow from said turbine stage active cooling system; **characterized in that**
air removed from the compressor (24) at the compressor bleed (112) exceeds a first threshold temperature that is a maximum temperature at which air can provide a full cooling effect to the turbine stage (130), air in said third fluid pathway (156) is overcooled below a second threshold temperature lower than the first threshold temperature, and a combined output of the third fluid pathway (156) and the first fluid pathway (152) is at a temperature between the first threshold and the second threshold; and **in that**
air in said mixing plenum is mixed air comprising a mixture of air from said first fluid pathway (152) and said third fluid pathway (156), and said mixed air exceeds the pressure threshold and is within an optimum cooling temperature range.

2. The method of claim 1, further comprising providing a portion of said overcooled air to a gas turbine engine component, thereby cooling said gas turbine engine component, wherein a temperature of said overcooled air is at least cold enough to provide a full cooling effect to said gas turbine engine component.

3. The method of claim 1 or 2, further comprising:
providing a first portion of said bleed air directly through the first fluid pathway (152) to at least one of a valve (164) joining the first fluid pathway (152) to the third fluid pathway (156), the mixing plenum, and the active cooling system for the turbine stage (130); and
providing a second portion of said bleed air to the heat exchanger (140) along the second fluid pathway (154).

4. The method of claim 3, wherein said first portion of said bleed air and said second portion of said bleed air are 100% of said bleed air.

5. The method of any preceding claim, further comprising controlling the operations of the heat exchanger (140) overcooling said portion of said bleed air, a first valve (162) connecting an output of the compressor bleed (112) to the first fluid pathway (152) and the second fluid pathway (154), and a second valve (164) joining said first fluid pathway (152) to the third fluid pathway (156).

## Patentansprüche

1. Verfahren zur Kühlung einer Turbinenstufe (130) eines Gasturbinentriebwerks (20), das Folgendes umfasst:
Unterkühlen eines Abschnitts eines Ablassluftstroms, um dadurch eine unterkühlte Luft zu erzeugen, wobei der Abschnitt geringer als 100 % der Ablassluft ist;
Mischen mindestens eines Abschnitts der unterkühlten Luft mit einem Rest des Ablassluftstroms, um dadurch einen Mischluftstrom zu erzeugen, der eine Temperatur innerhalb einer Kühltemperaturspanne aufweist;
Bereitstellen des Mischluftstroms für ein aktives Kühlsystem für die Turbinenstufe (130);
Bereitstellen einer Verdichterablassstruktur (112), die in einer ersten Verdichterstufe (110) angeordnet und betreibbar ist, um Luft von der ersten Verdichterstufe (110) zu entfernen;
Bereitstellen eines Fluidwegs (152, 154, 156), der die Verdichterablassstruktur (112) an das aktive Kühlsystem einer Turbinenstufe (130) anschließt, wobei der Fluidweg (152, 154, 156) einen ersten Fluidweg (152), der den Ausgang der Verdichterablassstruktur (112) direkt an einen Mischsammelraum anschließt, einen zweiten Fluidweg (154), der den Ausgang der Verdichterablassstruktur (112) an einen Eingang (142) eines Wärmetauschers (140) anschließt, und einen dritten Fluidweg (156) beinhaltet, der einen Ausgang (144) des Wärmetauschers (140) an den Mischsammelraum anschließt, und der Mischsammelraum an einen Kühllufteingang des aktiven Kühlsystems für die Turbinenstufe (130) angeschlossen ist; und
Ablassen von Luft von der ersten Verdichterstufe (110) unter Verwendung der Verdichterablassstruktur (112), wobei die erste Verdichterstufe (110) einen Fluiddruck aufweist, der mindestens einer Druckschwelle entspricht, wobei die Druckschwelle eine Druckmenge an dem Mischsammelraum ist, die erforderlich ist, um einen Rückstrom von dem aktiven Kühlsystem der Turbinenstufe zu verhindern; **dadurch gekennzeichnet, dass**
Luft, die von dem Verdichter (24) an dem Verdichterablass (112) entfernt ist, eine erste Schwellentemperatur übersteigt, die eine Maximaltemperatur ist, bei der Luft eine volle Kühlwirkung für die Turbinenstufe (130) bereitstellen kann, Luft in dem dritten Fluidweg (156) unter einer zweiten Schwellentemperatur unterkühlt ist, die geringer als die erste Schwellentemperatur ist und ein gemeinsamer Ausgang des dritten Fluidwegs (156) und des ersten Fluidwegs (152) bei einer Temperatur zwischen der ersten Schwelle und der zweiten Schwelle ist; und dadurch, dass
Luft in dem Mischsammelraum Mischluft ist, die eine Mischung von Luft von dem ersten Fluidweg (152) und dem dritten Fluidweg (156) umfasst, die Mischluft die Druckschwelle überschreitet und innerhalb einer optimalen Kühltemperaturspanne ist.

2. Verfahren nach Anspruch 1, das ferner ein Bereitstellen eines Abschnitts der unterkühlten Luft für eine Gasturbinentriebwerkskomponente umfasst, um damit die Gasturbinentriebwerkskomponente zu kühlen, wobei eine Temperatur der unterkühlten Luft mindestens kalt genug ist, um eine volle Kühlwirkung für die Gasturbinentriebwerkskomponente bereitzustellen.

3. Verfahren nach Anspruch 1 oder 2, das ferner Folgendes umfasst:
Bereitstellen eines ersten Abschnitts der Ablassluft direkt durch den ersten Fluidweg (152) für mindestens eines von einem Ventil (164), das den ersten Fluidweg (152) mit dem dritten Fluidweg (156), dem Mischsammelraum und dem aktiven Kühlsystem für die Turbinenstufe (130) verbindet; und
Bereitstellen eines zweiten Abschnitts der Ablassluft für den Wärmetauscher(140) entlang des zweiten Fluidwegs (154).

4. Verfahren nach Anspruch 3, wobei der erste Abschnitt der Ablassluft und der zweite Abschnitt der Ablassluft 100 % der Ablassluft sind.

5. Verfahren nach einem der vorhergehenden Ansprüche, das ferner ein Steuern von Operationen des Wärmetauschers (140) umfasst, der den Abschnitt der Ablassluft unterkühlt, wobei ein erstes Ventil (162) einen Ausgang des Verdichterablasses (112) an den ersten Fluidweg (152) und den zweiten Fluidweg (154) anschließt und ein zweites Ventil (164) den ersten Fluidweg (152) mit dem dritten Fluidweg (156) verbindet.

## Revendications

1. Procédé de refroidissement d'un étage de turbine (130) d'un moteur à turbine à gaz (20) comprenant :
le surrefroidissement d'une partie d'un écoulement d'air de purge créant ainsi un air surrefroidi, dans lequel ladite partie est inférieure à 100 % dudit air de purge ;
le mélange d'au moins une partie dudit air surrefroidi avec un reste dudit écoulement d'air de purge, créant ainsi un écoulement d'air mélangé ayant une température à l'intérieur d'une plage de température de refroidissement ;
la fourniture dudit écoulement d'air mélangé à un système de refroidissement actif pour l'étage de turbine (130) ;
la fourniture d'une structure de purge de compresseur (112) disposée dans un premier étage de compresseur (110) et pouvant fonctionner pour évacuer l'air depuis ledit premier étage de compresseur (110) ;
la fourniture d'un trajet de fluide (152, 154, 156) reliant la structure de purge de compresseur (112) au système de refroidissement actif d'un étage de turbine (130), dans lequel le trajet de fluide (152, 154, 156) comporte un premier trajet de fluide (152) reliant directement la sortie de la structure de purge de compresseur (112) à une chambre de mélange, un deuxième trajet de fluide (154) reliant la sortie de la structure de purge de compresseur (112) à une entrée (142) d'un échangeur de chaleur (140), et un troisième trajet de fluide (156) reliant une sortie (144) de l'échangeur de chaleur (140) à la chambre de mélange, et la chambre de mélange est reliée à une entrée d'air de refroidissement du système de refroidissement actif pour l'étage de turbine (130) ; et
la purge de l'air depuis le premier étage de compresseur (110) en utilisant la structure de purge de compresseur (112), dans lequel le premier étage de compresseur (110) a une pression de fluide au moins égale à un seuil de pression, dans lequel le seuil de pression est une quantité de pression au niveau de ladite chambre de mélange nécessaire pour empêcher le refoulement depuis ledit système de refroidissement actif d'étage de turbine ; **caractérisé en ce que**
l'air évacué depuis le compresseur (24) au niveau de la purge de compresseur (112) dépasse une première température seuil qui est une température maximale à laquelle l'air peut fournir un effet de refroidissement complet à l'étage de turbine (130), l'air dans ledit troisième trajet de fluide (156) est surrefroidi en dessous d'une seconde température seuil inférieure à la première température seuil, et une sortie combinée du troisième trajet de fluide (156) et du premier trajet de fluide (152) est à une température comprise entre le premier seuil et le second seuil ; et **en ce que**
l'air dans ladite chambre de mélange est de l'air mélangé comprenant un mélange d'air depuis ledit premier trajet de fluide (152) et ledit troisième trajet de fluide (156), et ledit air mélangé dépasse le seuil de pression et se trouve à l'intérieur d'une plage de température de refroidissement optimale.

2. Procédé selon la revendication 1, comprenant en outre la fourniture d'une partie dudit air surrefroidi à un composant de moteur à turbine à gaz, refroidissant ainsi ledit composant de moteur à turbine à gaz, dans lequel une température dudit air surrefroidi est au moins suffisamment froide pour fournir un effet de refroidissement complet audit composant de moteur à turbine à gaz.

3. Procédé selon la revendication 1 ou 2, comprenant en outre :
la fourniture d'une première partie dudit air de purge directement à travers le premier trajet de fluide (152) à au moins l'un parmi une soupape (164) joignant le premier trajet de fluide (152) au troisième trajet de fluide (156), la chambre de mélange et le système de refroidissement actif pour l'étage de turbine (130) ; et
la fourniture d'une seconde partie dudit air de purge à l'échangeur de chaleur (140) le long du deuxième trajet de fluide (154) .

4. Procédé selon la revendication 3, dans lequel ladite première partie dudit air de purge et ladite seconde partie dudit air de purge représentent 100 % dudit air de purge.

5. Procédé selon une quelconque revendication précédente, comprenant en outre la commande des opérations de l'échangeur de chaleur (140) surrefroidissant ladite partie dudit air de purge, une première soupape (162) reliant une sortie de la purge du compresseur (112) au premier trajet de fluide (152) et au deuxième trajet de fluide (154), et une seconde soupape (164) joignant ledit premier trajet de fluide (152) au troisième trajet de fluide (156).
